# EUROPÄISCHE PATENTSCHRIFT

(11) **EP 3 112 184 B1**
(45) Veröffentlichungstag und Bekanntmachung des Hinweises auf die Patenterteilung: **11.08.2021**
(21) Anmeldenummer: 15174517.1
(22) Anmeldetag: 30.06.2015
(51) Int. Cl.: B60B 33/00

(54) **LAUFROLLE UND VERFAHREN ZUR HERSTELLUNG EINER LAUFROLLE FÜR EINE TRANSPORTEINRICHTUNG, INSBESONDERE FÜR EINEN EINKAUFSWAGEN**
ROLLER AND METHOD FOR PRODUCING A ROLLERF OR A TRANSPORTATION DEVICE, IN PARTICULAR FOR A SHOPPING CART
GALET ET PROCÉDÉ DE FABRICATION D'UN GALET POUR UN DISPOSITIF DE TRANSPORT, EN PARTICULIER POUR UN CHARIOT DE SUPERMARCHE

(43) Veröffentlichungstag der Anmeldung: 04.01.2017
(73) Patentinhaber: Tente GmbH & Co. KG, 42929 Wermelskirchen (DE)
(72) Erfinder: Harksen, Uwe, 42929 Wermelskirchen (DE); Block, Wolfgang, 42929 Wermelskirchen (DE)
(74) Vertreter: Patentanwälte Walther Hinz Bayer PartGmbB

(56) Entgegenhaltungen:
- EP-B1- 0 850 142
- DE-B1- 2 656 322
- DE-U1- 29 619 734
- FR-A1- 3 008 025
- None

## Beschreibung

Die vorliegende Erfindung betrifft eine Laufrolle sowie ein Verfahren zur Herstellung einer Laufrolle eine Transporteinrichtung, insbesondere für einen Einkaufswagen, zur Beförderung auf einem eine längsgerillte Oberfläche aufweisenden Personenfahrsteig, wobei die Laufrolle ein Laufrad mit mindestens einer Rille aufweist, welches Laufrad in einer Gabel um eine Achse drehbar aufgenommen ist, und wobei die Rolle an ihren Seiten eine jeweils als Fadenschutz dienende und ruhend an der Gabel angeordnete Abdeckscheibe aufweist, und wobei die Laufrolle wenigstens einen Stützfuß zur Abstützung auf der längsgerillten Oberfläche des Personenfahrsteiges aufweist, wobei der Stützfuß an einem bodenseitigen Fortsatz der Abdeckscheibe ausgebildet ist.

### STAND DER TECHNIK

Die EP 0 850 142 B1 offenbart eine gattungsbildende Laufrolle für eine Transporteinrichtung, und die Laufrolle ist zur Anordnung an einen Einkaufswagen ausgebildet. Wird der Einkaufswagen von einer Person auf einen Personenfahrsteig geschoben, so gelangen die Erhebungen der gerillten Oberfläche des Personenfahrsteiges in die Rillen des Laufrades kammartig in Eingriff, sodass sich die Laufrolle unter Verringerung der Laufhöhe in die Oberfläche des Personenfahrsteiges einsetzt. Dadurch gelangen die Stützfüße an den Abdeckscheiben auf der Oberseite der Längsrillen des Personenfahrsteiges abstützend zur Auflage, sodass der Einkaufswagen über eine sich ergebende Reibung zwischen den Stützfüßen und der längsgerillten Oberfläche des Personenfahrsteiges festgesetzt ist. In dieser Anordnung der Laufrolle auf dem Personenfahrsteig nimmt das Laufrad keine Abstützkräfte auf.

Ein Fadenschutz dient dazu, dass sich im Betrieb der Laufrolle keine Fäden, Haare oder sonstiger Staub oder Verunreinigungen um die Achse wickeln können, die vom Laufrad durch Anhaftung aufgenommen werden. Die Abdeckscheiben sind dafür derart in die Seiten des Laufrades hineinragend ausgebildet, dass das Umfangsprofil des Laufrades die Abdeckscheiben seitlich überragt. Die Abdeckscheiben weisen dafür einen umlaufenden Rand auf, der sich in einen Innenbereich in das Laufrad hinein erstreckt. Fäden und dergleichen, die vom Laufrad vom Boden aufgenommen werden, können somit nicht zwischen die Abdeckscheibe und das Laufrad gelangen, sodass sich diese auch nicht um die Achse wickeln können.

Aufgrund der Ausbildung der Stützfüße an den bodenseitigen Fortsätzen der Abdeckscheiben müssen diese aus einem belastbaren, insbesondere harten Material ausgebildet sein. Zweckmäßigerweise werden die Abdeckscheiben dabei in einem Spritzgussverfahren aus einem Kunststoff hergestellt. Folglich muss der Kunststoff eine Mindesthärte aufweisen, um beispielsweise bei einem voll beladenen Einkaufswagen die Stützwirkung über den bodenseitigen Fortsatz erfüllen zu können. Die Abdeckscheiben sind dabei in der Gabel der Laufrolle aufgenommen und gemeinsam mit dem Laufrad mit der Achse zur Aufnahme des Laufrades gehalten.

Beim Betrieb von Laufrollen für Einkaufswagen hat sich das Problem gezeigt, dass insbesondere in Abhängigkeit des Neigungswinkels des Personenfahrsteiges und der Beschaffenheit der längsgerillten Oberfläche des Personenfahrsteiges der Einkaufswagen ins Rutschen gelangen kann. Insbesondere dann, wenn Öle, Fette oder dergleichen an den Stützflächen oder an der Oberfläche des Personenfahrsteiges anhaften, kann der Reibungswert zwischen dem Stützfuß und der längsgerillten Oberfläche des Personenfahrsteiges nicht mehr ausreichen, um den Einkaufswagen auf den in der Regel schräg verlaufenden Personenfahrsteig über die Reibungswirkung sicher zu halten.

Beispielsweise zeigt die DE 10 2010 034 381 A1 eine Laufrolle für eine Transporteinrichtung, beispielsweise für einen Einkaufswagen, wobei die Laufrolle eine Gabel aufweist, in der ein Laufrad aufgenommen ist. Die Gabel ist mit bodenseitigen Fortsätzen ausgeführt, an denen Stützmittel angebracht sind, jedoch ergibt sich das Problem, dass die Stützmittel lediglich von der Unterseite auf die Fortsätze an der Gabel aufgeschoben sind. Insbesondere dadurch, dass sich die Laufrollen im Laufbereich eines Benutzers der Transporteinrichtung während der Bedienung des Einkaufswagens befinden, kommt es regelmäßig zu dem Problem, dass sich die Stützmittel von den Fortsätzen an der Gabel ablösen, indem der Bediener von oben mit seinem Fuß die Stützmittel von dem Gabelende löst. Dabei sind häufig auch Verklebungen oder dergleichen nicht hinreichend, um ein Ablösen des als separates Bauteil ausgebildeten Stützmittels zu verhindern.

Eine weitere Ausgestaltung von Stützmitteln in Anordnung an bodenseitigen Fortsätzen einer Gabel an einer Laufrolle, die zur Aufnahme des Laufrades bestimmt ist, zeigt die EP 1 519 842 B1. Die offenbarten Stützmittel sind auf die bodenseitigen Enden der Gabel aufgeschoben, und wird der Einkaufswagen auf den Personenfahrsteig geschoben, so gelangen die Stützmittel zur Auflage auf die längsgerillte Oberfläche. Ein ungewolltes Ablösen der Stützmittel vom bodenseitigen Ende der Gabel zur Aufnahme des Laufrades lässt sich jedoch auch mit dieser Ausgestaltung nicht verhindern.

Aus der FR 3 008 025 A1 ist eine weitere Ausführung einer Rolle für einen Einkaufswagen bekannt, die ein Metallgehäuse aufweist, das unterseitig einen Fortsatz aufweist, der einteilig mit dem Metallgehäuse ausgestaltet ist.

Die DE 296 19 734 U1 lehrt eine Rolle für einen Einkaufswagen mit einem unterseitig aufgesteckten Fußelement, das für die üblicherweise raue Anwendungsumgebung nicht hinreichend verliersicher an dem metallischen Rahmenkörper der Laufrolle angebracht werden kann.

Schließlich zeigt die DE 26 56 322 B1 eine Laufrolle für einen Einkaufswagen aus einem metallischen Rahmenkörper mit ebenfalls einem unterseitig aufgesteckten Gummifortsatz in Form eines Bremsteils, der ebenso nicht hinreichend verliersicher an den Schenkeln des metallischen Rahmenkörpers angebracht werden kann.

### OFFENBARUNG DER ERFINDUNG

Aufgabe der Erfindung ist die Weiterbildung einer Laufrolle mit Stützfüßen, die an seitlich vom Laufrad angeordneten Abdeckscheiben ausgebildet sind, wobei die Abdeckscheiben einen Fadenschutz bilden sollen, und wobei die Stützfüße an den bodenseitigen Fortsätzen der Abdeckscheiben möglichst verliersicher ausgebildet sein sollen. Insbesondere soll erreicht werden, dass die Abdeckscheiben hohe Kräfte aufnehmen können und zugleich soll ein hoher Haftreibungskoeffizient zwischen den Stützfüßen und einer Aufstandsfläche erreicht werden.

Diese Aufgabe wird ausgehend von einer Laufrolle für eine Transporteinrichtung gemäß dem Oberbegriff des Anspruches 1 und ausgehend von einem Verfahren zur Herstellung der Laufrolle gemäß Anspruch 6 mit den jeweils kennzeichnenden Merkmalen gelöst.

Vorteilhafte Weiterbildungen der Erfindung sind in den abhängigen Ansprüchen angegeben.

Die Erfindung schließt die technische Lehre ein, dass der Stützfuß im Mehrkomponenten-Spritzgussverfahren, ausgebildet als Monosandwichverfahren, stoffschlüssig am bodenseitigen Fortsatz der Abdeckscheibe angespritzt ist und eine Außenkontur aufweist, die unterbrechungsfrei in eine Außenkontur der Abdeckscheibe übergeht.

Mit der erfindungsgemäßen Ausgestaltung des Stützfußes am bodenseitigen Fortsatz der Abdeckscheiben wird der Vorteil erreicht, dass sich der Werkstoff zur Bildung des Stützfußes vom Werkstoff zur Bildung der Abdeckscheibe unterscheiden kann. Zugleich wird der Stützfuß nicht mehr am bodenseitigen Fortsatz der Abdeckscheibe als Einzelteil aufgeschoben oder auf sonstige Weise formschlüssig mit dem Fortsatz verbunden, und durch die übergehende Außenkontur zwischen dem Stützfuß und der Abdeckscheibe wird das Problem vermieden, dass der Stützfuß ungewollt vom bodenseitigen Fortsatz der Abdeckscheibe abgezogen wird. Insbesondere durch die übergehende Außenkontur wird eine Kante des Stützfußes vermieden, die über der Außenfläche der Abdeckscheibe hervorsteht und an der eine Abzugskraft des Stützfußes vom bodenseitigen Fortsatz ungewollt eingeleitet werden könnte, beispielsweise durch die Fußbewegung eines Benutzers oder durch eine sonstige Fremdkörperberührung.

Der Stützfuß und die Abdeckscheibe sind vorteilhafterweise jeweils aus einem Kunststoff gebildet, wobei der Kunststoff des Stützfußes eine geringere Härte aufweist als der Kunststoff der Abdeckscheibe. Der Kunststoff der Abdeckscheibe kann mit einer höheren Härte ausgewählt werden, sodass die Abdeckscheibe die auftretenden Kräfte aufnehmen kann, die über die Achse vom Laufrad in die Laufrolle eingeleitet werden und insbesondere die Kräfte, die vom Stützfuß in die Abdeckscheiben eingeleitet wird. Der Stützfuß ist dabei aus einem Kunststoff gebildet, der eine geringere Härte aufweist, sodass die Reibung zwischen dem Stützfuß und der längsgerillten Oberfläche des Personenfahrsteiges erhöht wird, was mit einer geringeren Shore-Härte des Stützfußes einhergeht. Durch den weicheren Stützfuß entsteht ein höherer Haftreibungskoeffizient zwischen der Aufstandsfläche des Stützfußes und der längsgerillten Oberfläche des Personenfahrsteiges, womit sichergestellt ist, dass trotz einer hohen strukturellen Festigkeit der Laufrolle, insbesondere der Abdeckscheiben, auch bei geneigt verlaufenden Personenfahrsteigen ein Rutschen des Einkaufswagens verhindert ist. Durch die stoffschlüssige Verbindung des Stützfußes mit dem bodenseitigen Fortsatz der Abdeckscheibe wird eine sichere Anordnung des Stützfußes gewährleistet, insbesondere dann, wenn der Stützfuß selbst einen eher weichen Kunststoff aufweist, wodurch naturgemäß die Haltekräfte des Stützfußes aufgrund der begrenzten Eigenformstabilität bei einem formschlüssigen Verbinden des Stützfußes am bodenseitigen Fortsatz vermindert sind. Erst durch die stoffschlüssige Verbindung ergibt sich damit der entsprechende Vorteil.

Der Kunststoff der Abdeckscheibe weist beispielsweise einen PUR-Shore60D auf und/oder besitzt eine Shore-Härte von 57D bis 63D und bevorzugt von 60D. Insbesondere Abdeckscheiben mit einem derartigen Kunststoff und einer entsprechenden Shore-Härte sind hinreichend geeignet, teilweise hohe Tragkräfte der Laufrollen aufzunehmen, insbesondere wenn die Transporteinrichtung beladen ist und beispielsweise aufgrund von Bodenunebenheiten nur zwei Rollen der Transporteinrichtung zum Tragen kommen.

Mit weiterem Vorteil weist der Kunststoff des Stützfußes einen PUR-Shore 40D auf und/oder besitzt eine Shore-Härte von 38D bis 42D und bevorzugt von 40D. Ein Kunststoff mit einer Shore-Härte von beispielsweise 40D führt zu einer hinreichenden Nachgiebigkeit, um einen entsprechenden Reibschluss zzgl. Verschleißfestigkeit mit der längsgerillten Oberfläche des Personenfahrsteiges zu erreichen. Die Längsrillen weisen dabei oberseitige Dachflächen auf, auf denen der Stützfuß aufsitzt, wenn die Rillen des Laufrades in die Längsrillen der Oberfläche des Personenfahrsteiges einkämmen. Die Shore-Härte ist dabei mit besonderem Vorteil so gewählt, dass eine Abnutzung der Oberfläche des Stützfußes jedoch nicht übermäßig in Erscheinung tritt.

Gemäß der Erfindung ist der Stützfuß im Mehrkomponenten-Spritzgussverfahren an dem bodenseitigen Fortsatz der Abdeckscheibe angespritzt. Das Mehrkomponenten-Spritzgussverfahren kann beispielsweise als Mehrrohstoff-Spritzgießen ausgeführt sein, bei dem im selben Spritzgussprozess und insbesondere mit dem selben Werkzeug zunächst die Hart-Kunststoffkomponente zur Bildung der Abdeckscheibe in ein Formwerkzeug gespritzt wird, und erst anschließend wird die Weichkomponente nachgespritzt. Dieses sequenzielle Hart-Weich-Spritzen führt zu Hart-Weich-Verbindungen, durch die im vorliegenden Fall der Stützfuß stoffschlüssig an den bodenseitigen Fortsatz der zuerst gespritzten Abdeckscheibe angebunden wird. Ein vollständiges Aushärten der Abdeckscheibe ist dabei nicht zwingend notwendig, und die Weichkomponente kann gemeinsam mit der Hartkomponente aushärten. Insbesondere ergibt sich durch dieses Mehrrohstoff-Spritzgießen keine definierte Teilungsebene zwischen dem Stützfuß und dem bodenseitigen Fortsatz der Abdeckscheibe, und der stoffschlüssige Werkstoffübergang kann eine undefinierte Topografie aufweisen, was zu einer besonders hohen Anhaftungswirkung führt. Mit besonderem Vorteil weist der Kunststoff des Stützfußes die gleiche Farbe auf wie der Kunststoff der Abdeckscheibe, sodass der unregelmäßige Werkstoffübergang zwischen der Weichkomponente des Stützfußes und der Hartkomponente der Abdeckscheibe von der Außenseite nicht sichtbar ist. Insbesondere dann, wenn der Werkstoff der Abdeckscheibe aus einem Polyurethan mit einer Härte von 60D ausgebildet ist und wenn der Kunststoff des Stützfußes ebenfalls aus einem Polyurethan, allerdings mit einer Härte von 40D, ausgebildet ist, ergibt sich eine besonders gute stoffschlüssige Haftung zwischen den beiden Kunststoffkomponenten im hergestellten Materialverbund.

Der durch das Spritzgussverfahren gebildete Stützfuß kann schalenförmig ausgebildet sein und umschließt den bodenseitigen Fortsatz der Abdeckscheibe wenigstens teilweise.

Ein weiterer Vorteil wird erreicht, wenn sich die Abdeckscheibe in Richtung zum bodenseitigen Fortsatz hin wenigstens in einer Breitenrichtung verjüngt, wobei sich die Außenkontur der Abdeckscheibe und die Außenkontur des Stützfußes in stetiger Weise, also unterbrechungsfrei ineinander übergehend verjüngen. Dadurch wird verstärkt ein Ablösen des Stützfußes von dem bodenseitigen Fortsatz der Abdeckscheibe vermieden, wobei sich die verjüngende Form beispielweise nur in einer Richtung ergibt, und in einer weiteren Richtung, beispielsweise in der Erstreckungsrichtung der Achse zur Aufnahme des Laufrades, kann der Stützfuß am bodenseitigen Fortsatz eine ebenfalls stetig verlaufende Verbreiterung aufweisen, um eine hinreichende Aufstandsfläche auf der längsgerillten Oberfläche des Personenfahrsteiges zu erreichen.

Die Erfindung richtet sich weiterhin auf ein Verfahren zur Herstellung einer Laufrolle für eine Transporteinrichtung, insbesondere für einen Einkaufswagen, zur Beförderung auf einem eine längsgerillte Oberfläche aufweisenden Personenfahrsteig, wobei ein Laufrad mit mindestens einer Rille bereitgestellt wird, welches Laufrad in einer Gabel um eine Achse drehbar aufgenommen wird, und wobei an den Seiten der Laufrolle jeweils eine als Fadenschutz dienende Abdeckscheibe ruhend an der Gabel angeordnet wird, wofür Abdeckscheiben bereitgestellt werden, die mit einem bodenseitigen Fortsatz zur Ausbildung eines Stützfußes ausgeführt sind. Erfindungsgemäß wird der Stützfuß stoffschlüssig am bodenseitigen Fortsatz der Abdeckscheibe angespritzt, wobei der Stützfuß mit einer Außenkontur gebildet wird, die unterbrechungsfrei in eine Außenkontur der Abdeckscheibe übergeht. Die weiteren Merkmale und zugeordneten Vorteile, die vorstehend in Zusammenhang mit der erfindungsgemäßen Laufrolle dargelegt sind, finden für das Verfahren ebenfalls Berücksichtigung.

Das Verfahren wird erfindungsgemäß so ausgeführt werden, dass der Stützfuß im Mehrkomponenten-Spritzgussverfahren an den bodenseitigen Fortsatz der Abdeckscheibe angespritzt wird. Die zunächst noch als Einzelteil handhabbare, unmontierte Abdeckscheibe wird hierfür durch ein Spritzgussverfahren aus einer Hartkomponente hergestellt, und eine Weichkomponente wird im gleichen Spritzprozess der Hartkomponente nachgespritzt.

Gemäß der Erfindung wird dafür das sogenannte Monosandwichverfahren angewandt. Das Monosandwichverfahren wird dabei so ausgeführt, dass zunächst die Komponente zur Bildung des Hauptkörpers, nämlich der Abdeckscheibe, mittels eines Hauptextruders plastifiziert und in die Kavität eingespritzt wird, anschließend bzw. bereits zeitgleich wird mittels eines Nebenextruders die Komponente zur Bildung des Nebenkörpers, nämlich der Stützfuß, plastifiziert und nach dem Einspritzen der Hauptkomponente durch die gleiche Öffnung in die Kavität nachgespritzt.

Dadurch können beide Komponenten durch eine gemeinsame Einspritzöffnung in die Kavität eingespritzt werden, wobei der Haupt- und der Nebenextruder beispielsweise senkrecht aufeinander stehend angeordnet sind. Der Vorteil ist insbesondere, dass nicht einzelne Komponenten des Zweikomponentenbauteils, also die Abdeckscheibe oder der Stützfuß, aus einer ersten Spritzform herausgenommen oder in eine zweite Spritzform eingelegt werden müssen. Auch sind keine Schieber zur Veränderung der Kavität in der Spritzform erforderlich. Die Grenzfläche zwischen der Abdeckscheibe und dem Stützfuß ist dabei undefiniert ausgebildet und weist damit eine unbestimmte Topographie auf.

Vorteilhafter Weise wird der Stützfuß schalenförmig bereitgestellt, wobei die Schalenform des Stützfußes den bodenseitigen Fortsatz der Abdeckscheibe wenigstens teilweise umschließt.

### AUSFÜHRUNGSBEISPIEL DER ERFINDUNG

Weitere, die Erfindung verbessernde Maßnahmen werden nachstehend gemeinsam mit der Beschreibung möglicher, vorteilhafter Ausführungsbeispiele der Erfindung anhand der Figuren näher dargestellt. Es zeigt:
- Fig. 1: eine perspektivische Ansicht einer Laufrolle für eine Transporteinrichtung mit einer Abdeckscheibe, und am bodenseitigen Fortsatz der jeweiligen Abdeckscheibe ist ein Stützfuß durch ein Kunststoffspritzgussverfahren angespritzt,
- Fig. 2: eine Seitenansicht des Ausführungsbeispiels der Laufrolle gemäß Figur 1 mit den angespritzten Stützfüßen,
- Fig. 3: eine perspektivische Ansicht der Laufrolle mit einer abgewandelten Variante von erfindungsgemäßen Stützfüßen, die im Mehrkomponenten-Spritzgussverfahren an den bodenseitigen Fortsatz angespritzt sind, wobei die Stützfüße zum Zweck der besseren Ansicht getrennt vom bodenseitigen Fortsatz der Abdeckscheiben gezeigt sind,
- Fig. 4: das Ausführungsbeispiel gemäß Figur 3, wobei die Stützfüße angeordnet am bodenseitigen Fortsatz der Abdeckscheiben dargestellt sind,
- Fig. 5: eine perspektivische Ansicht einer Laufrolle mit schalenförmig ausgebildeten Stützfüßen, die stoffschlüssig an dem bodenseitigen Fortsatz der Abdeckscheiben angeordnet sind, wobei die Stützfüße beabstandet zu den Abdeckscheiben gezeigt sind,
- Fig. 6: die Laufrolle gemäß Figur 5, wobei die Stützfüße an den Abdeckscheiben angeordnet gezeigt sind,
- Fig. 7: eine Laufrolle mit Stützfüßen, die zusätzlich zur stoffschlüssigen Verbindung eine Formschlussgeometrie zur Anordnung an den bodenseitigen Fortsatz der Abdeckscheibe aufweisen,
- Fig. 8: eine perspektivische Ansicht der Laufrolle gemäß Figur 7, wobei die Stützfüße am bodenseitigen Fortsatz angeordnet gezeigt sind und
- Fig. 9: einen Einkaufswagen mit an diesen angeordneten Laufrollen.

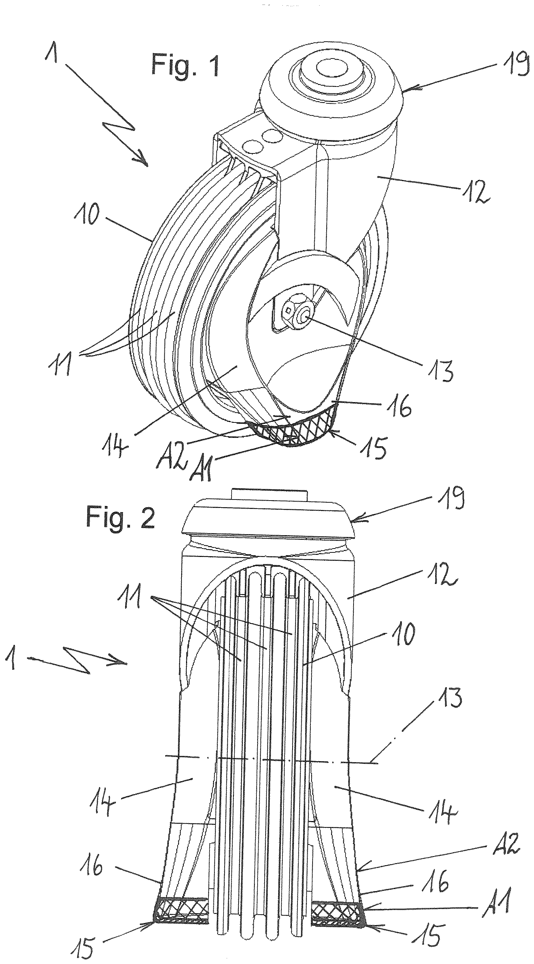

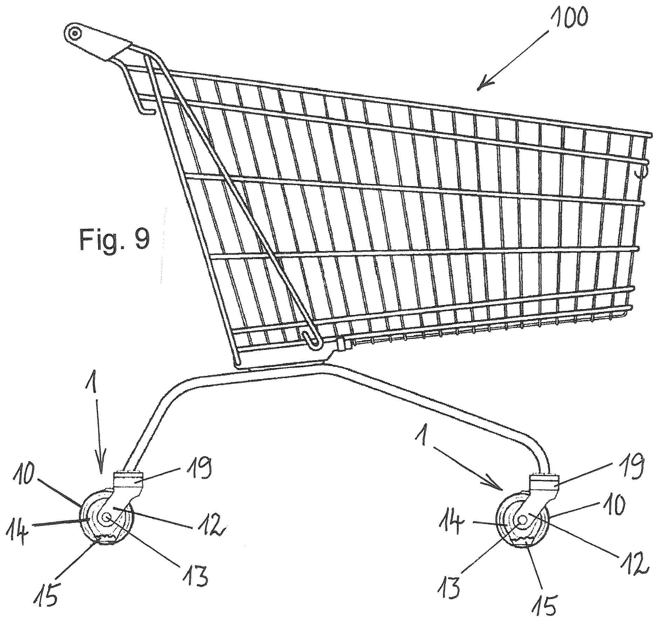

Die Figuren 1 bis 8 zeigen Ausführungsbeispiele einer als Lenkrolle ausgeführten Laufrolle 1 für eine Transporteinrichtung. Typischerweise ist eine derartige Laufrolle 1 an einem Einkaufswagen 100 befestigt, siehe Figur 9, und kann zur Beförderung auf einem eine Längsrille gerillte Oberfläche aufweisenden Personenfahrsteig dienen.

Die Laufrolle 1 weist ein Laufrad 10 auf, und das Laufrad 10 besitzt auf der Umfangsfläche eine Anzahl von Rillen 11. Das Laufrad 10 ist in einer Achse 13 drehbar in einer Gabel 12 angeordnet, wofür die Achse 13 zwischen zwei Gabelschenkeln der Gabel 12 aufgenommen ist. Die Achse 13 erstreckt sich dabei etwa horizontal und die Gabel 12 ist oberseitig über ein Drehlager 19 so aufgenommen, dass die Laufrolle 1 im Betrieb um eine Hochachse verschwenken kann.

An der Gabel 12 sind weiterhin seitlich zum Laufrad 10 angeordnete Abdeckscheiben 14 aufgenommen. Die Abdeckscheiben 14 bilden einen sogenannten Fadenschutz, der verhindert, dass sich Haare, Fäden, Verunreinigungen und dergleichen, die vom Laufrad 10 vom Boden aufgenommen werden, um die Achse 13 wickeln können. Hierfür besitzen die Abdeckscheiben 14 einen seitlich in das Laufrad 10 hineinragenden Bund, sodass das Laufrad 10 in seiner Breite die Abdeckscheiben 14 überragt. Die Abdeckscheiben 14 weisen nach unten gerichtete, bodenseitige Fortsätze 16 auf, und an den bodenseitigen Fortsätzen 16 schließen sich Stützfüße 15 der Laufrolle 1 an bzw. sind an den bodenseitigen Fortsätzen 16 angebracht.

Die Figuren 1 und 2 zeigen ein erstes Ausführungsbeispiel zur Anordnung der Stützfüße 15 an die bodenseitigen Fortsätze 16. Die Stützfüße 15 sind hierfür stoffschlüssig an den bodenseitigen Fortsätzen 16 der Abdeckscheiben 14 angespritzt. Der Stoffschluss ist dabei durch das Mehrkomponenten-Spritzgußverfahren, ausgebildet als Monosandwichverfahren gebildet, wodurch die Möglichkeit besteht, eine Hartkomponente zur Bildung der Abdeckscheiben 14 und eine Weichkomponente zur Bildung der Stützfüße 15 beim Spritzgießen des Verbundes durch ein serielles, aufeinanderfolgendes Einspritzen in eine einzige Kunststoff-Spritzgussform herzustellen.

Die Stützfüße 15 weisen eine Außenkontur A1 auf, die in stetiger Weise und damit unterbrechungsfrei in eine Außenkontur A2 der Abdeckscheiben 14 übergeht. Damit ergeben sich zwischen Stützfuß 15 und Abdeckscheibe 14 keine Kanten oder Absätze, sodass ein ungewolltes Abziehen der Stützfüße 15 von den Fortsätzen 16 der Abdeckscheibe 14 verhindert ist.

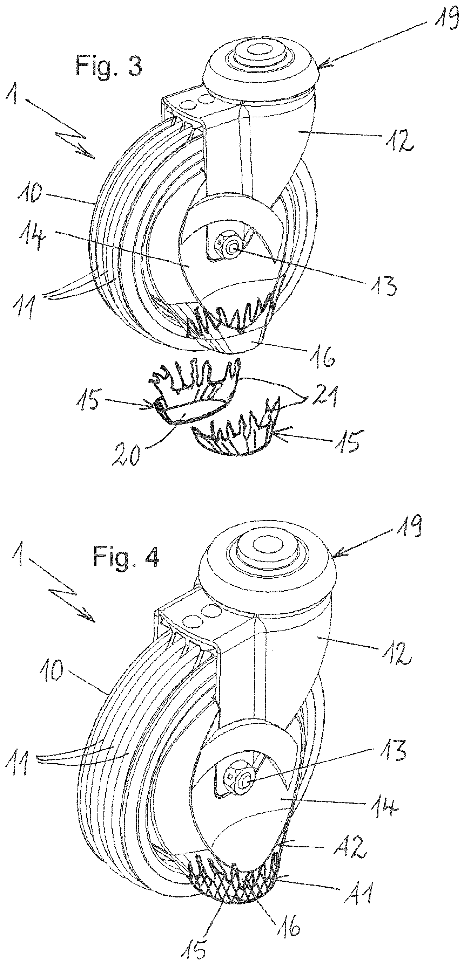

Die Figuren 3 und 4 zeigen in einer abgewandelten Darstellung die Laufrolle 1 in einer perspektivischen Ansicht, wobei in Figur 3 die Stützfüße 15 entfernt von den Abdeckscheiben 14 und in Figur 4 angeordnet an den Abdeckscheiben 14 dargestellt sind.

Das Ausführungsbeispiel der Stützfüße 15 weist zur stoffschlüssigen Verbindungsfläche an die bodenseitigen Fortsätze 16 hin eine undefinierte Topographie auf, die durch eine Ausläuferkontur 21 bestimmt ist und die im Mehrkomponenten-Spritzgussverfahren entsteht. Bei der Herstellung der Abdeckscheiben 14 wird zunächst eine Hartkomponente in ein entsprechendes Formwerkzeug eingespritzt, insbesondere mittels eines ersten Extruders, und eine Weichkomponente wird durch einen zweiten Extruder, insbesondere jedoch durch die gleiche Einspritzöffnung, in die gleiche Form eingespritzt. Die Form des sequenziellen Spritzgießens von Hart- und Weichkomponente erzeugt keine definierte Teilungsebene zwischen der Hartkomponente zur Bildung der Abdeckscheibe und der Weichkomponente zur Bildung des Stützfußes. Somit entsteht ein undefinierter stoffschlüssiger Übergang von dem Stützfuß 15 in den bodenseitigen Fortsatz 16 der Abdeckscheiben 14. Die Dicke der Stützfüße 15 kann beispielsweise zwischen 0,1 mm bis 5 mm und vorzugsweise zwischen 0,2 mm bis 3 mm betragen, wobei sich die Dicke auf einen Bodenbereich 20 der Stützfüße 15 bezieht. Die undefinierte Auslaufkontur 21, die sich vom Bodenbereich 20 weg streckt, weist eine geringere Dicke auf und kann in die Enden spitz auslaufen.

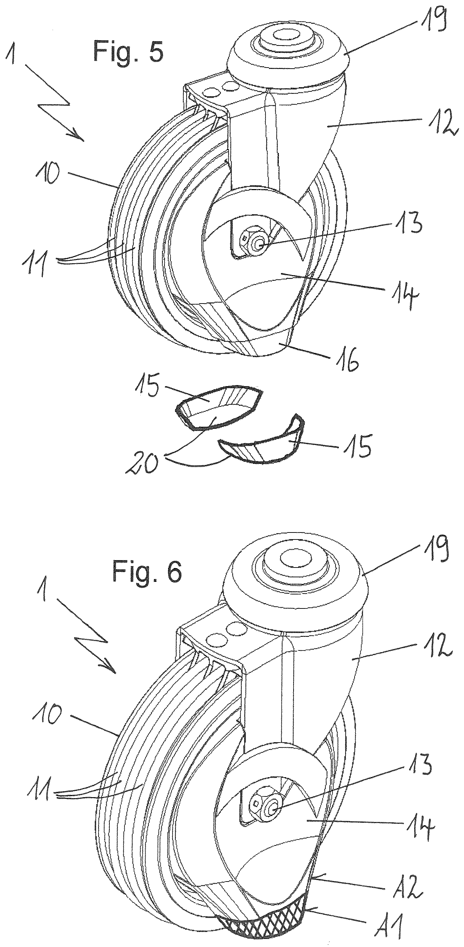

Die Figuren 5 und 6 zeigen beispielhaft eine andere Form der Laufrolle 1 mit Stützfüßen 15, die durch formstabile Ansatzkörper gebildet sind, die durch ein stoffschlüssiges Verfahren an die bodenseitigen Fortsätze 16 der Abdeckscheiben 14 angebracht werden. Dabei sind die Stützfüße 15 an die bodenseitigen Fortsätze 16 der Abdeckscheibe 14 angespritzt, indem beispielsweise für die Stützfüße 15 eine entsprechend definierte Kavität im Werkzeug bereitgestellt wird. Dadurch ergibt sich eine vorbestimmte Konturierung der Stützfüße 15 mit ihren Grenzflächen, die an den bodenseitigen Fortsätzen 16 anhaften, wobei die Außenkonturen A1 und A2 der Stützfüße 15 und der Abdeckscheiben 14 ebenfalls unterbrechungsfrei und insbesondere stetig ineinander übergehen. Insbesondere sind die Stützfüße 15 anvulkanisiert, sodass eine sichere stoffschlüssige Haftung zwischen der Weichkomponente des Stützfußes 15 und der Hartkomponente der Abdeckscheibe 14 sichergestellt ist. Die Stützfüße 15 umschließen einen Teil des bodenseitigen Fortsatzes 16 etwa halbschalenartig und weisen einen Bodenbereich 20 mit einer Dicke von beispielsweise etwa 0,2 bis 3 mm auf.

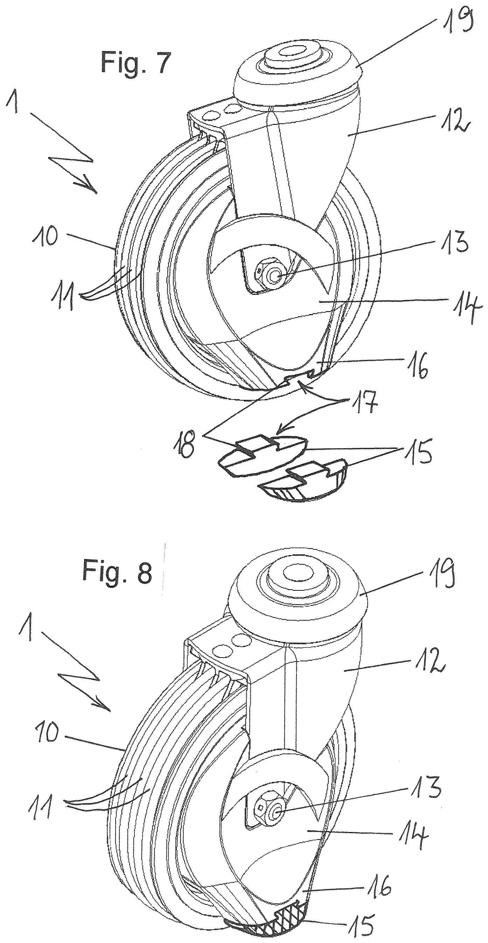

Die Figuren 7 und 8 stellen in perspektivischer Ansicht eine Laufrolle 1 mit Stützfüßen 15 dar, die eine Formschlussgeometrie 17 zur Anbindung an den bodenseitigen Fortsatz 16 der Abdeckscheiben 14 aufweisen. Die Formschlussgeometrien 17 weisen Hinterschnitte 18 auf, die in Form von Schwalbenschwanzkonturen ausgebildet sind. Durch ein Mehrkomponenten-Spritzgussverfahren sind die Stützfüße 15 an die Formschlussgeometrie 17 angespritzt, sodass sich die jeweils komplementäre, gegenüberliegende Geometrie zur Bildung des Formschlusses an der vorliegenden Formschlussgeometrie 17 anpasst.

Schließlich stellt Figur 9 einen Einkaufswagen 100 als Beispiel für eine Transporteinrichtung dar, an der die Laufrollen 1 in Gestalt von Lenkrollen unterseitig montiert sind. Die Laufrollen 1 sind über die Drehlager 19 mit dem Einkaufswagen 100 verbunden, und unterseitig des Drehlagers 19 schließt sich die Gabel 12 an, über die in der Achse 13 drehbar das Laufrad 10 aufgenommen ist. Seitlich zum Laufrad 10 befindet sich die Abdeckscheibe 14, und bodenseitig ist an der Abdeckscheibe 14 jeweils ein Stützfuß 15 angebracht. Der Stützfuß 15 ist dabei integral mit der Abdeckscheibe 14 ausgebildet und der Stützfuß 15 und die Abdeckscheibe 14 bilden einen Verbundkörper, der zwei Kunststoffkomponenten aufweist: Die Abdeckscheibe 14 ist aus einem harten Kunststoff und der Stützfuß 15 ist aus einem weichen Kunststoff hergestellt. Setzen die Stützfüße 15 auf einer längsgerillten Oberfläche eines Personenfahrsteiges auf, ergibt sich eine hohe Haftreibungskraft durch die weiche Kunststoffkomponente, aus der die Stützfüße 15 gebildet sind. Durch die harte Kunststoffkomponente zur Bildung der Abdeckscheiben 14 können die Kräfte über die Abdeckscheiben 14 in die zumeist aus einem metallischen Werkstoff hergestellte Gabel 12 übergeleitet werden, wobei die Abdeckscheiben 14 über die Achse 13 mit der Gabel 12 verbunden ist, und durch die harte Kunststoffkomponente nehmen diese auch bei hohen mechanischen Belastungen keinen Schaden.

### Bezugszeichenliste

- 100: Einkaufswagen

- 1: Laufrolle
- 10: Laufrad
- 11: Rille
- 12: Gabel
- 13: Achse
- 14: Abdeckscheibe
- 15: Stützfuß
- 16: bodenseitiger Fortsatz
- 17: Formschlussgeometrie
- 18: Hinterschnitt
- 19: Drehlager
- 20: Bodenbereich
- 21: Auslaufkontur

- A1: Außenkontur des Stützfußes
- A2: Außenkontur der Abdeckscheibe

## Patentansprüche

1. Laufrolle (1) für eine Transporteinrichtung, insbesondere für einen Einkaufswagen (100), zur Beförderung auf einem eine längsgerillte Oberfläche aufweisenden Personenfahrsteig, wobei die Laufrolle (1) ein Laufrad (10) mit mindestens einer Rille (11) aufweist, welches Laufrad (10) in einer Gabel (12) um eine Achse (13) drehbar aufgenommen ist, und wobei die Laufrolle (1) an ihren Seiten eine jeweils als Fadenschutz dienende und ruhend an der Gabel (12) angeordnete Abdeckscheibe (14) aufweist, und wobei die Laufrolle (1) wenigstens einen Stützfuß (15) zur Abstützung auf der längsgerillten Oberfläche des Personenfahrsteiges aufweist, wobei der Stützfuß (15) an einem bodenseitigen Fortsatz (16) der Abdeckscheibe (14) ausgebildet ist,
**dadurch gekennzeichnet, dass** der Stützfuß (15) im Mehrkomponenten-Spritzgussverfahren, ausgebildet als Monosandwichverfahren, stoffschlüssig am bodenseitigen Fortsatz (16) der Abdeckscheibe (14) angespritzt ist und eine Außenkontur (A1) aufweist, die unterbrechungsfrei in eine Außenkontur (A2) der Abdeckscheibe (14) übergeht.

2. Laufrolle (1) nach Anspruch 1, **dadurch gekennzeichnet, dass** der Stützfuß (15) und die Abdeckscheibe (14) jeweils aus einem Kunststoff gebildet sind, wobei der Kunststoff des Stützfußes (15) eine geringere Härte aufweist als der Kunststoff der Abdeckscheibe (14).

3. Laufrolle (1) nach Anspruch 2, **dadurch gekennzeichnet, dass** der Kunststoff der Abdeckscheibe (14) durch ein Polyurethan gebildet ist und/oder dass der Kunststoff der Abdeckscheibe (14) eine Shore-Härte von von 57D bis 63D und bevorzugt von 60D aufweist.

4. Laufrolle (1) nach Anspruch 2 oder 3, **dadurch gekennzeichnet, dass** der Kunststoff der Abdeckscheibe (14) durch ein Polyurethan gebildet ist und/oder dass der Kunststoff der Abdeckscheibe (14) eine Shore-Härte von von 38D bis 42D und bevorzugt von 40D aufweist.

5. Laufrolle (1) nach einem der vorgenannten Ansprüche, **dadurch gekennzeichnet, dass** sich die Abdeckscheibe (14) in Richtung zum bodenseitigen Fortsatz (16) hin verjüngt, wobei sich die Außenkontur (A2) der Abdeckscheibe (14) und die Außenkontur (A1) des Stützfußes (15) in stetiger Weise und unterbrechungsfrei ineinander übergehend verjüngen.

6. Verfahren zur Herstellung einer Laufrolle (1) für eine Transporteinrichtung, insbesondere für einen Einkaufswagen (100), zur Beförderung auf einem eine längsgerillte Oberfläche aufweisenden Personenfahrsteig, wobei
- ein Laufrad (10) mit mindestens einer Rille (11) bereitgestellt wird, welches Laufrad (10) in einer Gabel (12) um eine Achse (13) drehbar aufgenommen wird, und wobei
- an den Seiten der Laufrolle (1) jeweils eine als Fadenschutz dienende Abdeckscheibe (14) ruhend an der Gabel (12) angeordnet wird, wofür
- Abdeckscheiben (14) bereitgestellt werden, die mit einem bodenseitigen Fortsatz (16) zur Ausbildung eines Stützfußes (15) ausgeführt sind,
**dadurch gekennzeichnet, dass**
- der Stützfuß (15) im Mehrkomponenten-Spritzgussverfahren, ausgebildet als Monosandwichverfahren, stoffschlüssig am bodenseitigen Fortsatz (16) der Abdeckscheibe (14) angespritzt wird und wobei
- der Stützfuß (15) mit einer Außenkontur (A1) gebildet wird, die unterbrechungsfrei in eine Außenkontur (A2) der Abdeckscheibe (15) übergeht.

7. Verfahren nach Anspruch 6, **dadurch gekennzeichnet, dass** der Stützfuß (15) schalenförmig bereitgestellt wird, wobei die Schalenform des Stützfußes (15) den bodenseitigen Fortsatz (16) der Abdeckscheibe (14) wenigstens teilweise umschließt.

## Claims

1. A caster (1) for a transport device, in particular for a shopping trolley (100), for conveying on a pedestrian moving walkway having a longitudinally grooved surface, wherein the caster (1) has a wheel (10) having at least one groove (11), which wheel (10) is received rotatably about an axle (13) in a fork (12), and wherein the caster (1) has a cover plate (14) at its sides that respectively serves as a thread guard and is arranged resting on the fork (12), and wherein the caster (1) has at least one support (15) for support on the longitudinally grooved surface of the pedestrian moving walkway, with the support (15) being formed at a prolongation (16) of the cover plate (14) at the floor side,
**characterized in that** the support (15) is injection molded to the prolongation (16) of the cover plate (14) at the floor side by a positive substance joining in the multicomponent injection molding process, configured as a monosandwich process, and has an outer contour (A1) that merges without interruption into an outer contour (A2) of the cover plate (14).

2. A caster (1) in accordance with claim 1, **characterized in that** the support (15) and the cover plate (14) are each formed from a plastic, with the plastic of the support (15) having a smaller hardness than the plastic of the cover plate (14).

3. A caster (1) in accordance with claim 2, **characterized in that** the plastic of the cover plate (14) is formed by a polyurethane; and/or **in that** the plastic of the cover plate (14) has a Shore hardness of from 57D to 63D and preferably of 60D.

4. A caster (1) in accordance with claim 2 or claim 3, **characterized in that** the plastic of the cover plate (14) is formed by a polyurethane; and/or **in that** the plastic of the cover plate (14) has a Shore hardness of from 38D to 42D and preferably of 40D.

5. A caster (1) in accordance with one of the preceding claims, **characterized in that** the cover plate (14) tapers in the direction toward the prolongation (16) at the floor side, with the outer contour (A2) of the cover plate (14) and the outer contour (A1) of the support (15) tapering in a constant manner and merging into one another without interruption.

6. A method of manufacturing a caster (1) for a transport device, in particular for a shopping trolley (100), for conveying on a pedestrian moving walkway having a longitudinally grooved surface, wherein
- a wheel (10) having at least one groove (11) is provided, which wheel (10) is received rotatably about an axle (13) in a fork (12); and wherein
- a cover plate (14) is arranged at the sides of the caster (1) that respectively serves as a thread guard and is resting on the fork (12), for which purpose
- cover plates (14) are provided that are designed with a prolongation (16) at the floor side to form a support (15),
**characterized in that**
- the support (15) is injection molded in a multicomponent injection molding process, configured as a monosandwich process, with material continuity to the prolongation (16) of the cover plate (14) at the floor side; and with
- the support (15) being formed with an outer contour (A1) that merges without interruption into an outer contour (A2) of the cover plate (14).

7. A method in accordance with claim 6, **characterized in that** the support (15) is provided in bowl form, with the bowl form of the support (15) at least partially surrounding the prolongation (16) of the cover plate (14) at the floor side.

## Revendications

1. Galet (1) pour un dispositif de transport, en particulier pour un chariot de supermarché (100), destiné au transport sur un trottoir roulant pour le transport de personnes comportant une surface rainurée en long, le galet (1) comportant une roue (10) avec au moins une rainure (11), ladite roue (10) étant reçue dans une chape (12) de manière rotative sur un axe (13) et la roue (1) comportant sur ses côtés une plaque de recouvrement (14) servant respectivement de pare-fils et disposée de façon à reposer sur la chape (12), et le galet (1) comportant au moins un pied d'appui (15) destiné à l'appui sur la surface rainurée en long du trottoir roulant pour le transport de personnes, le pied d'appui (15) étant réalisé sur un prolongement (16) côté sol de la plaque de recouvrement (14),
**caractérisé en ce que** le pied d'appui (15) est injecté sur le prolongement (16) côté sol de la plaque de recouvrement (14) avec liaison de matière selon un procédé de moulage par injection multi-composants, se présentant sous la forme d'un procédé monosandwich, et présente un contour extérieur (A1), qui se fond sans interruption dans un contour extérieur (A2) de la plaque de recouvrement (14).

2. Galet (1) selon la revendication 1, **caractérisé en ce que** le pied d'appui (15) et la plaque de recouvrement (14) sont respectivement formés en une matière plastique, la matière plastique du pied d'appui (15) présentant une dureté inférieure à la matière plastique de la plaque de recouvrement (14).

3. Galet (1) selon la revendication 2, **caractérisé en ce que** la matière plastique de la plaque de recouvrement (14) est formée par un polyuréthane et/ou **en ce que** la matière plastique de la plaque de recouvrement (14) présente une dureté Shore de 57D à 63D et de préférence de 60D.

4. Galet (1) selon la revendication 2 ou 3, **caractérisé en ce que** la matière plastique de la plaque de recouvrement (14) est formée par un polyuréthane et/ou **en ce que** la matière plastique de la plaque de recouvrement (14) présente une dureté Shore de 38D à 42D et de préférence de 40D.

5. Galet (1) selon l'une des revendications précédentes, **caractérisé en ce que** la plaque de recouvrement (14) s'amincit en direction du prolongement (16) côté sol, le contour extérieur (A2) de la plaque de recouvrement (14) et le contour extérieur (A1) du pied d'appui (15) s'amincissant en se fondant l'un dans l'autre de manière continue et sans interruption.

6. Procédé de fabrication d'un galet (1) pour un dispositif de transport, en particulier pour un chariot de supermarché (100), destiné au transport sur un trottoir roulant pour le transport de personnes présentant une surface rainurée en long, dans lequel
- une roue (10) avec au moins une rainure (11) est fournie, ladite roue (10) étant reçue dans une chape (12) de manière rotative sur un axe (13) et dans lequel
- une plaque de recouvrement (14), servant de pare-fils, est disposée respectivement sur les côtés du galet (1) de façon à reposer sur la chape (12), pour laquelle
- des plaques de recouvrement (14), qui sont exécutées avec un prolongement (16) côté sol pour former un pied d'appui (15), sont fournies,
**caractérisé en ce que**
- le pied d'appui (15) est injecté sur le prolongement (16) côté sol de la plaque de recouvrement (14) avec liaison de matière selon un procédé de moulage par injection multi-composants, se présentant sous la forme d'un procédé monosandwich et dans lequel
- le pied d'appui (15) est formé avec un contour extérieur (A1), qui se fond sans interruption dans un contour extérieur (A2) de la plaque de recouvrement (14).

7. Procédé selon la revendication 6, **caractérisé en ce que** le pied d'appui (15) est fourni en forme de cuvette, la forme de cuvette du pied d'appui (15) entourant au moins en partie le prolongement (16) côté sol de la plaque de recouvrement (14).
